(19) Europäisches Patentamt
European Patent Office
Office européen des brevets

(11) **EP 4 197 847 B1**

(12) **EUROPÄISCHE PATENTSCHRIFT**

(45) Veröffentlichungstag und Bekanntmachung des Hinweises auf die Patenterteilung:
**01.04.2026  Patentblatt 2026/14**

(21) Anmeldenummer: **22209521.8**

(22) Anmeldetag: **25.11.2022**

(51) Internationale Patentklassifikation (IPC):
**B60L 7/22** *(2006.01)*    **B60L 9/00** *(2019.01)*
**B60L 15/20** *(2006.01)*    **B60L 50/53** *(2019.01)*
**B60L 55/00** *(2019.01)*

(52) Gemeinsame Patentklassifikation (CPC):
**B60L 7/22; B60L 9/00; B60L 15/2009; B60L 50/53; B60L 55/00;** B60L 2200/26

(54) **VERFAHREN ZUM BETREIBEN EINES FAHRZEUGS**

METHOD FOR OPERATING A VEHICLE

PROCÉDÉ DE FONCTIONNEMENT D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **15.12.2021  DE 102021214407**

(43) Veröffentlichungstag der Anmeldung:
**21.06.2023  Patentblatt 2023/25**

(73) Patentinhaber: **Siemens Mobility GmbH**
**80997 München (DE)**

(72) Erfinder: **Hassler, Stefan**
**91281 Kirchenthumbach, OT Neuzirkendorf (DE)**

(74) Vertreter: **Siemens Patent Attorneys**
**Postfach 22 16 34**
**80506 München (DE)**

(56) Entgegenhaltungen:
**EP-A- 1 985 490     JP-A- 2008 263 741**
**JP-A- 2017 099 172     US-A- 5 331 261**

- **OGASA MASAMICHI: "Onboard storage in Japanese electrified lines", POWER ELECTRONICS AND MOTION CONTROL CONFERENCE (EPE/PEMC), 2010 14TH INTERNATIONAL, IEEE, PISCATAWAY, NJ, USA, 6 September 2010 (2010-09-06), pages S7 - 9, XP031778306, ISBN: 978-1-4244-7856-9**

**Beschreibung**

Die Erfindung bezieht sich auf ein Verfahren zum Betreiben eines Fahrzeugs, das mit einem streckenseitigen Energieversorgungsnetz in Verbindung steht.

Im Bereich der Eisenbahntechnik ist ein Verfahren bekannt, bei dem während eines Bremsbetriebs in einem Streckenabschnitt, in dem eine Energierückspeisung in das streckenseitige Energieversorgungsnetz zulässig ist, ein Antrieb des Fahrzeugs als elektrodynamische Bremse betrieben wird und die elektrische Bremsenergie des Antriebs in einen Gleichspannungszwischenkreis eingespeist wird. Von dem Gleichspannungszwischenkreis wird die Bremsenergie in das streckenseitige Energieversorgungsnetz weitergeleitet. Während eines Betriebs in einem Streckenabschnitt, in dem eine Energierückspeisung in das streckenseitige Energieversorgungsnetz verboten ist, wird der elektrodynamische Bremsbetrieb deaktiviert, wodurch eine Einspeisung von Bremsenergie in den Gleichspannungskreis unterbleibt und damit mittelbar auch die Energierückspeisung in das Energieversorgungsnetz unterbunden wird, weil es an rückspeisbarer Bremsenergie bzw. Bremsleistung fehlt.

Das Dokument US 5 331 261 A offenbart einen regenerativen Bremsschutz für ein elektrisch angetriebenes Fahrzeug, insbesondere ein Schienenfahrzeug, wobei das Fahrzeug mit einer bestromten dritten Schiene über Stromaufnehmer verbunden ist und bei Durchfahren einer Lücke zwischen zwei benachbarten Schienenabschnitten ein regenerativen Bremsen verhindert wird, sofern nicht der nächste Abschnitt der dritten Schiene bestromt ist. Bekannt sind ferner die Dokumente JP 2008 263741 A, JP 2017 099172 A, EP 1 985 490 A1 sowie der Artikel OGASA MASAMICHI: "Onboard storage in Japanese electrified lines", POWER ELECTRONICS AND MOTION CONTROL CONFERENCE (EPE/ PEMC), 2010 14TH INTERNATIONAL, IEEE, PISCATAWAY, NJ, USA, 6. September 2010 (2010-09-06), Seiten S7-9 bis S7-15.

Der Erfindung liegt die Aufgabe zugrunde, ein Verfahren zum Betreiben eines Fahrzeugs mit Blick auf einen verbesserten Bremsbetrieb weiterzuentwickeln.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass während eines Bremsbetriebs innerhalb eines Streckenabschnitts mit unzulässiger Energierückspeisung ins Energieversorgungsnetz ein Antrieb des Fahrzeugs als elektrodynamische Bremse betrieben wird und elektrische Bremsenergie des Antriebs in einen Gleichspannungszwischenkreis des Fahrzeugs eingespeist wird, Energie aus dem Gleichspannungszwischenkreis entnommen wird, indem ein Laststrom in eine fahrzeugseitige Last eingespeist wird, und eine Energierückspeisung vom Gleichspannungszwischenkreis in das Energieversorgungsnetz blockiert wird.

Ein Vorteil des erfindungsgemäßen Verfahrens ist darin zu sehen, dass dieses auch einen elektrodynamischen Bremsbetrieb in Streckenabschnitten vorsieht, in denen eine Energierückspeisung verboten ist, wie dies beispielsweise bei sogenannten Inselnetzen der Fall sein kann. Das elektrodynamische Bremsen bleibt bei dem erfindungsgemäßen Verfahren möglich, weil ein Energietransfer vom Gleichspannungszwischenkreis in das Energieversorgungsnetz gezielt blockiert wird. Die auftretende elektrische Bremsenergie wird vom Gleichspannungszwischenkreis zu einer fahrzeugseitigen Last geleitet, die die Bremsenergie aufnimmt, sei es beispielsweise durch Umwandlung in Wärme oder Speicherung.

Ein weiterer Vorteil des erfindungsgemäßen Verfahrens ist darin zu sehen, dass der Verschleiß von Reibungsbremsen reduziert wird, weil auf deren Einsatz auch in Streckenabschnitten ohne Energierückspeisemöglichkeit - vollständig oder zumindest zum Teil - verzichtet werden kann.

Um eine Änderung der Zwischenkreisspannung zu vermeiden bzw. die Zwischenkreisspannung konstant zu halten, kann der Bremsstrom des Antriebs gemessen und der Laststrom durch die Last entsprechend derart geregelt werden, dass die von der Last aufgenommene Leistung der Bremsleistung entspricht.

Erfindungsgemäß wird die Höhe des Laststroms in Abhängigkeit von einer Bremskraftangabe eingestellt, die eine dem Antrieb vorgegebene und von diesem auszuübende Bremskraft, also die Sollbremskraft, angibt. Die Sollbremskraft kann beispielsweise von einem Schienenfahrzeugführer durch Verstellen eines Bremshebels vorgegeben bzw. eingestellt werden. Die Bremskraftangabe kann in einem solchen Falle beispielsweise der jeweiligen Stellung des Bremshebels entsprechen.

Erfindungsgemäß wird in Abhängigkeit von der Bremskraftangabe die elektrische Bremsleistung des Antriebs berechnet und wird anhand der berechneten Bremsleistung ein Solllaststrom berechnet, der durch die Last fließen soll.

Erfindungsgemäß wird ein interner Umrichter, der zwischen den Gleichspannungszwischenkreis und die fahrzeugseitige Last geschaltet ist, in Abhängigkeit von dem berechneten Solllaststrom gesteuert.

Die Berechnung des Solllaststromes erfolgt vorzugsweise derart, dass die Leistungsentnahme aus dem Gleichspannungszwischenkreis, die vom Solllaststrom hervorgerufen wird, der Bremsleistung entspricht, die vom Antrieb gemäß der Bremskraftangabe beim elektrodynamischen Bremsbetrieb in den Gleichspannungszwischenkreis eingespeist wird.

Der Solllaststrom wird bevorzugt wie folgt berechnet:

$$\texttt{Isoll(t) = Fsoll} \cdot \texttt{V(t)/Ulast}$$

wobei Fsoll die Bremskraft, die der Antrieb gemäß der Bremskraftangabe erzeugen soll, t die Zeit, V die Geschwindigkeit des Fahrzeugs, Ulast die Spannung an der Last und Isoll den Solllaststrom bezeichnet, den der interne Umrichter in die Last einspeisen soll.

Erfindungsgemäß wird der interne Umrichter derart geregelt, dass die Höhe des Laststroms dem berechneten Solllaststrom entspricht.

Unter Umständen können jedoch Ungenauigkeiten bei der Berechnung des Solllaststroms dazu führen, dass die Zwischenkreisspannung schwankt, weil die in den Gleichspannungszwischenkreis eingespeiste Bremsleistung von der von der Last tatsächlich aufgenommenen Leistung abweicht. Aus diesem Grunde ist erfindungsgemäß vorgesehen, dass der interne Umrichter derart betrieben wird, dass der Laststrom dem berechneten Solllaststrom entspricht, solange die Zwischenkreisspannung einen vorgegebenen Spannungsmaximalwert unterschreitet, und der Laststrom größer als der berechnete Solllaststrom eingestellt wird, wenn die Zwischenkreisspannung den vorgegebenen Spannungsmaximalwert überschreitet. Durch die Erhöhung des Laststroms kann in einfacher Weise der Spannungserhöhung entgegengewirkt werden. Vorteilhaft ist es, wenn ein Differenzspannungswert ermittelt wird, der die Überschreitung des Spannungsmaximalwerts quantitativ angibt.

Liegt ein solcher Differenzspannungswert vor bzw. wird der Spannungsmaximalwert überschritten, so wird der Laststrom vorzugsweise um eine Stromdifferenz erhöht, die proportional zu dem ermittelten Differenzspannungswert ist.

Die Stromdifferenz lässt sich in vorteilhafter Weise mit einem PI-Regler ermitteln.

Mit Blick auf ein Verhindern einer Energierückspeisung in Streckenabschnitten, in denen keine Energie zurückgespeist werden darf, wird es als vorteilhaft angesehen, wenn das Fahrzeug einen netzseitigen Umrichter aufweist, der den Gleichspannungszwischenkreis mit dem streckenseitigen Energieversorgungsnetz verbindet oder zumindest verbinden kann. Die Energierückspeisung vom Gleichspannungszwischenkreis in das Energieversorgungsnetz wird vorzugsweise blockiert, indem der netzseitige Umrichter in Rückspeiserichtung blockiert wird, beispielsweise durch ein geeignetes Ein- und Ausschalten von internen Schaltelementen des Umrichters.

Für den Fall, dass der Laststrom zu groß ist bzw. die in die Last eingespeiste Leistung größer als die Bremsleistung ist, wird es als vorteilhaft angesehen, wenn der netzseitige Umrichter derart angesteuert wird, dass er netzseitige Energie auch während des Bremsbetriebs in den Gleichspannungszwischenkreis einspeist, sofern die Zwischenkreisspannung einen vorgegebenen Spannungsminimalwert unterschreitet.

Die netzseitige Energie bzw. der Netzstrom, die bzw. den der netzseitige Umrichter während des Bremsbetriebs in den Gleichspannungszwischenkreis einspeist, ist vorzugsweise proportional zur Differenz zwischen dem Spannungsminimalwert und der Höhe der Zwischenkreisspannung, also mit anderen Worten proportional zu dem Spannungsbetrag, um den die Zwischenkreisspannung den Spannungsminimalwert unterschreitet.

Der Spannungsmaximalwert ist vorzugsweise zwischen 50 V und 150 V größer als der Spannungsminimalwert.

Eine Energierückspeisung lässt sich - wie erwähnt - durch Ansteuern des netzseitigen Umrichters vermeiden. Alternativ oder zusätzlich kann vorgesehen sein, dass eine Energierückspeisung durch eine zusätzliche Sperreinrichtung, die zwischen den Gleichspannungszwischenkreis und den netzseitigen Umrichter geschaltet ist, blockiert wird. Eine dauerhafte Blockade der Energierückspeisung kann in vorteilhafter Weise durch eine Diode bewirkt werden, deren Flussrichtung in Richtung des Gleichspannungszwischenkreises geschaltet ist und somit Strom und Energie ausschließlich in Richtung des Gleichspannungszwischenkreises fließen lässt.

In Streckenabschnitten mit zulässiger Energierückspeisung wird vorzugsweise eine Energierückspeisung in Richtung des streckenseitigen Energieversorgungsnetzes beim Bremsen des Fahrzeugs erlaubt, beispielsweise wenn keine Bremsenergie im Fahrzeug mehr verbraucht oder gespeichert werden kann oder soll. Die Energierückspeisung in Richtung des streckenseitigen Energieversorgungsnetzes erfolgt vorzugsweise durch Ansteuerung des netzseitigen Umrichters und/oder Deaktivieren (z. B. Kurzschließen) der erwähnten Sperreinrichtung.

Der interne Umrichter ist vorzugsweise ein DC/DC-Wandler. Mit einem DC/DC-Wandler lässt sich einfach und vorteilhaft beispielsweise als Last eine Batterie mit einem Ladestrom (als Laststrom) beaufschlagen.

Soll die Bremsenergie nicht gespeichert werden, sondern nur in Wärme umgesetzt werden, so kann als interner Umrichter ein Wechselrichter eingesetzt werden, der als Last einen ohmschen Widerstand mit Laststrom beaufschlagt.

Die Erfindung bezieht sich außerdem auf ein Fahrzeug mit einem Stromabnehmer, der mit einem streckenseitigen Energieversorgungsnetz verbindbar ist.

Erfindungsgemäß ist bezüglich eines solchen Fahrzeugs vorgesehen, dass dieses derart ausgestaltet ist, dass bei Fahrt des Fahrzeugs in einem Streckenabschnitt, in dem eine Energierückspeisung in das streckenseitige Energieversorgungsnetz unzulässig ist, während des Bremsbetriebs ein Antrieb des Fahrzeugs als elektrodynamische Bremse betreibbar ist und elektrische Bremsenergie in einen Gleichspannungszwischenkreis einspeisen kann, Energie aus dem Gleichspannungszwischenkreis entnehmbar ist, indem ein Laststrom in eine fahrzeugseitige Last eingespeist wird, und eine Energierückspeisung vom Gleichspannungszwischenkreis in das Energieversorgungsnetz blockiert wird.

Bezüglich der Vorteile des erfindungsgemäßen Fahrzeugs und dessen vorteilhafter Ausgestaltungen sei auf die obigen Ausführungen im Zusammenhang mit dem erfindungsgemäßen Verfahren und dessen vorteilhafter Ausgestaltungen verwiesen. Vorteilhaft ist es insbesondere, wenn das Fahrzeug so wie oben im Zusammenhang mit dem erfindungsgemäßen Verfahren beschrieben betrieben wird bzw. zum Betrieb gemäß dem oben beschriebenen Verfahren ausgestaltet ist.

Erfindungsgemäß weist das Fahrzeug einen internen Umrichter auf, der zwischen den Gleichspannungszwischenkreis und die fahrzeugseitige Last geschaltet ist und dazu ausgebildet ist, den Laststrom aus dem Gleichspannungszwischenkreis in die fahrzeugseitige Last einzuspeisen.

Alternativ oder zusätzlich kann in vorteilhafter Weise vorgesehen sein, dass das Fahrzeug einen netzseitigen Umrichter aufweist, der den Gleichspannungszwischenkreis mit dem streckenseitigen Energieversorgungsnetz verbindet oder zumindest verbinden kann und bei Bremsbetrieb in dem genannten Streckenabschnitt, in dem die Energierückspeisung in das streckenseitige Energieversorgungsnetz unzulässig ist, in Energierückflussrichtung gesperrt ist oder gesperrt wird.

Erfindungsgemäß weist das Fahrzeug eine Steuereinrichtung oder ein Steuermodul auf, die bzw. das mit dem internen Umrichter verbunden ist und bei Vorliegen eines Sperrsignals, insbesondere Inselnetzsignals, das ein Befahren eines Streckenabschnitts ohne Energierückspeisungsmöglichkeit anzeigt, den internen Umrichter dazu ansteuert, einen Solllaststrom, der unter Heranziehung einer Bremskraftangabe ermittelt worden ist, zu entnehmen und den Laststrom höher als den Solllaststrom einzustellen, wenn die Zwischenkreisspannung einen vorgegebenen Spannungsmaximalwert (Umax) überschreitet.

Die Erhöhung des Laststromes bzw. die Differenz zwischen dem erhöhten Laststrom und dem Solllaststrom ist vorzugsweise proportional zur Differenz zwischen dem Wert der Zwischenkreisspannung und dem Spannungsmaximalwert, also mit anderen Worten proportional zu dem Spannungsbetrag, um den die Zwischenkreisspannung den Spannungsmaximalwert überschreitet.

Die Steuereinrichtung ist vorzugsweise außerdem mit dem netzseitigen Umrichter verbunden und dazu ausgestaltet, den netzseitigen Umrichter in Energierückflussrichtung zu sperren, wenn das Sperrsignal vorliegt. Unterschreitet die Zwischenkreisspannung einen vorgegebenen Spannungsminimalwert, so wird vorzugsweise Energie auch während des Bremsbetriebs in das streckenseitige Energieversorgungsnetz eingespeist.

Die netzseitige Energie bzw. der Netzstrom, die bzw. den der netzseitige Umrichter während des Bremsbetriebs in den Gleichspannungszwischenkreis einspeist, ist vorzugsweise proportional zur Differenz zwischen dem Spannungsminimalwert und der Höhe der Zwischenkreisspannung, also mit anderen Worten proportional zu dem Spannungsbetrag, um den die Zwischenkreisspannung den Spannungsminimalwert unterschreitet.

Alternativ oder zusätzlich kann ein erstes Steuermodul vorhanden sein, das bei Vorliegen eines Sperrsignals, das ein Befahren eines Streckenabschnitts ohne Energierückspeisungsmöglichkeit anzeigt, den internen Umrichter dazu ansteuert, dem Gleichspannungszwischenkreis den Laststrom zu entnehmen.

Das erste Steuermodul arbeitet mit Bezug auf die Ansteuerung des internen Umrichters vorzugsweise so wie die oben beschriebene Steuereinrichtung.

Das erste Steuermodul kann beispielsweise als Softwaremodul in der Steuersoftware eines zentralen Fahrzeugsteuergeräts oder in der Steuersoftware des internen Umrichters implementiert sein.

Auch kann - alternativ oder zusätzlich - ein zweites Steuermodul vorhanden sein, das dazu ausgestaltet ist, den netzseitigen Umrichter in Energierückflussrichtung zu sperren, wenn das Sperrsignal vorliegt. Das zweite Steuermodul steuert den netzseitigen Umrichter vorzugsweise derart an, dass dieser netzseitige Energie auch während des Bremsbetriebs in den Gleichspannungszwischenkreis einspeist, sofern die Zwischenkreisspannung einen vorgegebenen Spannungsminimalwert unterschreitet.

Das zweite Steuermodul arbeitet mit Bezug auf die Ansteuerung des netzseitigen Umrichters vorzugsweise so wie die oben beschriebene Steuereinrichtung.

Das zweite Steuermodul kann beispielsweise als Softwaremodul in der Steuersoftware eines zentralen Fahrzeugsteuergeräts oder in der Steuersoftware des netzseitigen Umrichters implementiert sein.

Das erste und zweite Steuermodul arbeiten vorzugsweise autark voneinander.

Die Erfindung wird nachfolgend anhand von Ausführungsbeispielen näher erläutert, dabei zeigen beispielhaft:

Figur 1    ein erstes Ausführungsbeispiel für ein erfindungsgemäßes Schienenfahrzeug,

Figur 2    ein Blockschaltbild, das beispielhaft Verfahrensschritte zum Begrenzen der Zwischenkreisspannung im Bremsbetrieb zeigt,

Figur 3    ein Blockschaltbild, das beispielhaft Verfahrensschritte zum Erhöhen der Zwischenkreisspannung im Bremsbetrieb zeigt,

Fig. 4-7    weitere Ausführungsbeispiele für erfindungsgemäße Schienenfahrzeuge.

In den Figuren werden der Übersicht halber für identische oder vergleichbare Komponenten dieselben Bezugszeichen verwendet.

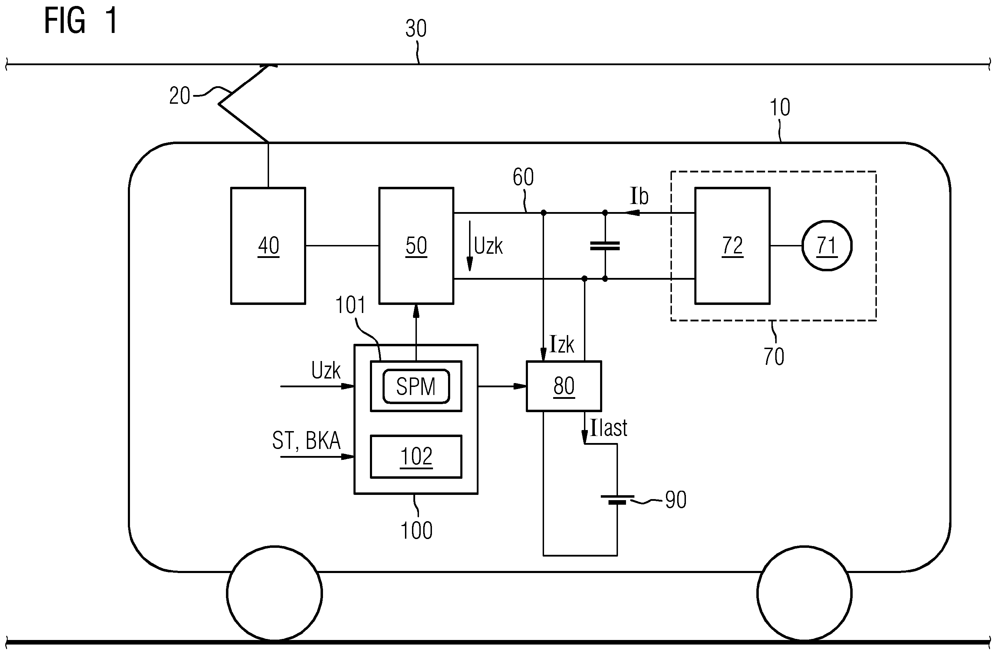

Die Figur 1 zeigt ein Ausführungsbeispiel für ein Schienenfahrzeug 10, das mit einem Stromabnehmer 20 zum Anschluss an ein streckenseitiges Energieversorgungsnetz 30 ausgestattet ist. Der Stromabnehmer 20 ist über einen Transformator 40 an einen netzseitigen Umrichter 50 angeschlossen. Bei dem netzseitigen Umrichter 50 handelt es sich vorzugsweise um einen Vierquadrantensteller.

Ein Gleichspannungszwischenkreis 60 verbindet den netzseitigen Umrichter 50 mit einem Antrieb 70. Der Antrieb 70 umfasst beispielsweise einen oder mehrere Motoren 71, die über einen oder mehrere antriebsseitige Umrichter 72, wie beispielsweise Pulswechselrichter, mit dem Gleichspannungszwischenkreis 60 verbunden sind.

Bei dem Ausführungsbeispiel gemäß Figur 1 ist an den Gleichspannungszwischenkreis 60 außerdem ein interner Umrichter 80 angeschlossen, der den Gleichspannungszwischenkreis 60 mit einer elektrischen Last in Form eines elektrischen Energiespeichers 90 verbindet. Bei dem elektrischen Energiespeicher 90 handelt es sich vorzugsweise um eine Batterie oder einen elektrischen Kondensator. Der interne Umrichter 80 ist vorzugsweise ein DC/DC-Steller (Gleichspannungssteller).

Die Ansteuerung des internen Umrichters 80 und des netzseitigen Umrichters 50 erfolgt durch eine Steuereinrichtung 100, die mit den beiden Umrichtern 50 und 80 in Verbindung steht. Die Steuereinrichtung 100 erfasst an einem Messeingang einen Spannungsmesswert, der die Zwischenkreisspannung Uzk des Gleichspannungszwischenkreises 60 angibt. An einem Steuersignaleingang empfängt sie ein Steuersignal ST, das anzeigt, ob im aktuell befahrenen Streckenabschnitt eine Energierückspeisung in das streckenseitige Energieversorgungsnetz 30 zulässig ist oder nicht. An dem Steuersignaleingang kann die Steuereinrichtung außerdem eine Bremskraftangabe BKA erhalten, die beim Bremsen eine dem Antrieb 70 vorgegebene Sollbremskraft Fsoll definiert.

Im Antriebsbetrieb des Schienenfahrzeugs 10 kann der Antrieb 70 mit elektrischer Energie des streckenseitigen Energieversorgungsnetzes 30 versorgt werden. Alternativ oder zusätzlich kann der Antrieb 70 mit elektrischer Energie des Energiespeichers 90 betrieben werden. Die Energieentnahme steuert die Steuereinrichtung 100 vorzugsweise unter Einbezug des jeweiligen Ladezustands des Energiespeichers 90. Auch kann mit Energie des streckenseitigen Energieversorgungsnetzes 30 gleichzeitig sowohl der Antrieb 70 versorgt als auch der Energiespeicher 90 geladen werden.

Im Bremsbetrieb des Schienenfahrzeugs 10 wird der Antrieb 70 vorzugsweise als elektrodynamische Bremse betrieben und dessen elektrische Bremsenergie in den Gleichspannungszwischenkreis 60 einspeist. Um einen Anstieg der Zwischenkreisspannung Uzk über ein zulässiges Maß hinaus zu vermeiden, arbeitet die Steuereinrichtung 100 vorzugsweise wie folgt:

Im Falle, dass das eingangsseitig anliegende Steuersignal ST anzeigt, dass eine Energierückspeisung in das streckenseitige Energieversorgungsnetz 30 zulässig ist, kann die elektrische Bremsenergie in das streckenseitige Energieversorgungsnetz 30 eingespeist werden. Alternativ oder zusätzlich kann der Energiespeicher 90 geladen werden. Das Laden steuert die Steuereinrichtung 100 vorzugsweise unter Berücksichtigung des jeweiligen Ladezustands des Energiespeichers 90.

Im Falle, dass das eingangsseitig anliegende Steuersignal ST anzeigt, dass eine Energierückspeisung in das streckenseitige Energieversorgungsnetz 30 unzulässig ist, also das Steuersignal ST ein Sperrsignal bildet, so steuert die Steuereinrichtung 100 den netzseitigen Umrichter 50 derart an, dass eine Rückspeisung unterbleibt. Der interne Umrichter 50 wird derart angesteuert, dass beim Bremsbetrieb aus dem Gleichspannungszwischenkreis 60 ein Strom Izk entnommen wird, der dem von dem Antrieb 70 eingespeisten Bremsstrom Ib zumindest näherungsweise entspricht. Durch diese Maßnahme wird die Zwischenkreisspannung Uzk konstant gehalten, zumindest aber wird einem Anstieg der Zwischenkreisspannung Uzk entgegengewirkt.

Möglich ist es, den Bremsstrom Ib zu messen und den Strom Izk entsprechend zu regeln. Besonders vorteilhaft ist es jedoch, die Höhe des nötigen Laststroms Ilast, der zum Konstanthalten der Zwischenkreisspannung Uzk in den Energiespeicher 90 fließen müsste, zu schätzen, und zwar in Abhängigkeit von der Bremskraftangabe BKA, die die dem Antrieb 70 vorgegebene Sollbremskraft Fsoll definiert. Die Sollbremskraft Fsoll kann beispielsweise von einem Schienenfahrzeugführer durch Verstellen eines Bremshebels eingestellt werden. Die Bremskraftangabe BKA entspricht in einem solchen Falle beispielsweise der jeweiligen Stellung des Bremshebels.

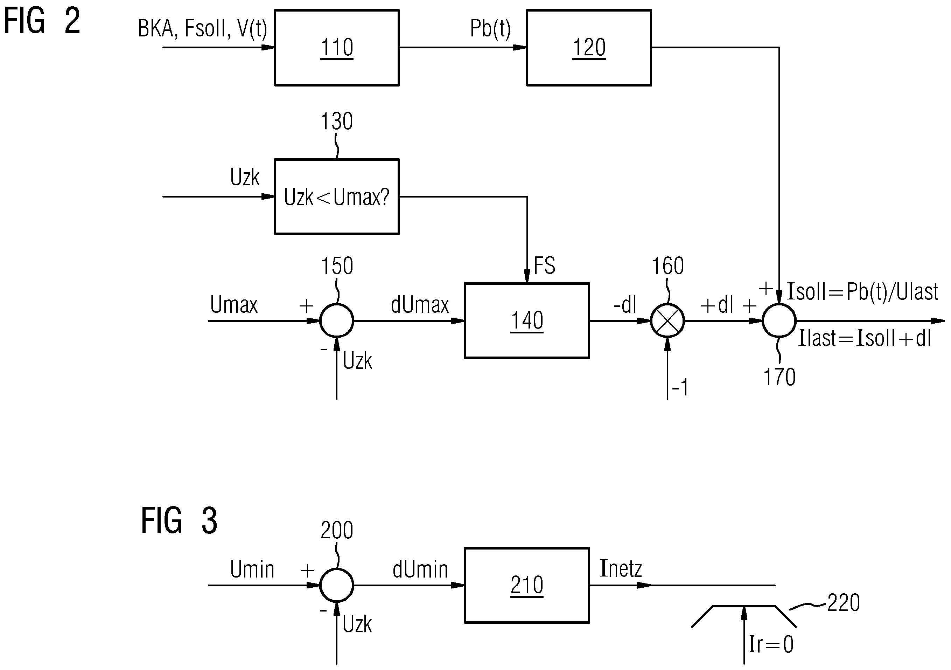

Ein Blockschaltbild, das beispielhaft eine mögliche technische Umsetzung einer bremskraftbezogenen Steuerung des internen Umrichters 80 zeigt, ist in der Figur 2 dargestellt. Die in Figur 2 gezeigte Steuerung geht von dem Gedanken aus, dass zumindest näherungsweise folgender mathematischer Zusammenhang gilt:

$$Wb = Fsoll \cdot X$$

wobei Wb die Bremsenergie des Antriebs und X die Wegstreckenkoordinate beschreibt.

$$Mit\ V = X/t\ erhält\ man$$

$$Pb = Wb/t = Fsoll \cdot S/t = Fsoll \cdot V(t) = Uzk \cdot Izk = Ulast \cdot Isoll$$

und

$$Isoll(t) = Fsoll \cdot V(t)/Ulast$$

wobei Pb die Bremsleistung, t die Zeit, V die Geschwindigkeit des Schienenfahrzeugs 10, Ulast die Spannung an dem Energiespeicher 90 und Isoll einen Solllaststrom Isoll bezeichnet, den der interne Umrichter 50 in den Energiespeicher 90 einspeisen soll.

Die Berechnung des Solllaststroms Isoll erfolgt bei dem Ausführungsbeispiel gemäß Figur 2 in zwei Umrechnungsmodulen der Steuereinrichtung 100, die vorzugsweise softwaremäßig realisiert sind.

Das in der Figur 2 linke bzw. erste Umrechnungsmodul 110 berechnet die Bremsleistung auf der Basis der jeweiligen Geschwindigkeit V(t) gemäß

$$Pb(t) = Wb/t = Fsoll \; S/t = Fsoll \; V(t)$$

Das nachgeordnete zweite Umrechnungsmodul 120 berechnet den Solllaststrom Isoll unter Berücksichtigung des Ergebnisses des ersten Umrechnungsmoduls 110 unter Bildung eines Solllastromwerts gemäß

$$Isoll(t) = Pb(t)/Ulast$$

Auf der Basis des Solllastromwerts des zweiten Umrechnungsmoduls 120 steuert die Steuereinrichtung 100 den internen Umrichter 50 derart an, dass die Höhe des Laststroms Ilast dem berechneten Solllaststrom Isoll entspricht. Der interne Umrichter 50 arbeitet somit als stromgeregelter Tiefsetzsteller.

Da das oben beschriebene mathematische Modell relativ einfach ist und nicht alle technischen Einflüsse und Wirkungsgrade etc. berücksichtigt, kann es unter Umständen dazu kommen, dass der berechnete Solllaststrom Isoll zu klein ist und die Zwischenkreisspannung Uzk ansteigt.

Um zu vermeiden, dass die Zwischenkreisspannung Uzk über einen vorgegebenen Spannungsmaximalwert Umax hinaus ansteigt, wird es als vorteilhaft angesehen, wenn die beschriebene Regelung des internen Umrichters 80 - also die Arbeitsweise als stromgeregelter Tiefsetzsteller - nur solange erfolgt, wie die Zwischenkreisspannung Uzk den Spannungsmaximalwert Umax unterschreitet. Zu diesem Zwecke ist bei dem Ausführungsbeispiel gemäß Figur 2 zusätzlich ein Vergleichsmodul 130 vorgesehen, das die Zwischenkreisspannung Uzk mit dem Spannungsmaximalwert Umax vergleicht.

Stellt das Vergleichsmodul 130 fest, dass die Zwischenkreisspannung Uzk den Spannungsmaximalwert Umax überschreitet, so erzeugt es ein Freigabesignal FS für einen PI-Regler 140, der eingangsseitig mit einem Differenzspannungswert dUmax beaufschlagt ist. Der Differenzspannungswert dUmax quantifiziert die Differenz zwischen der tatsächlichen Zwischenkreisspannung Uzk und dem Spannungsmaximalwert Umax und wird von einem Differenzbildner 150 gebildet.

Liegt das Freigabesignal FS vor, so erzeugt der PI-Regler 140 ausgangsseitig einen Stromdifferenzwert dI, der proportional zu dem ermittelten Differenzspannungswert dUmax ist. Der Stromdifferenzwert dI wird mittels eines Multiplizierers 160 einem Vorzeichenwechsel unterzogen und vorzeichenkorrigiert mit dem Solllastromwert des zweiten Umrechnungsmoduls 120 in einem Addierer 170 addiert, wodurch der resultierende Laststrom Ilast erhöht wird. Es gilt also:

$$Ilast = Isoll + dI.$$

Die beschriebenen Komponenten gewährleisten, dass bei einem Überschreiten des Spannungsmaximalwerts Umax der Laststrom Ilast ansteigt und dadurch die Zwischenkreisspannung Uzk abgesenkt wird, weil das Vergleichsmodul 130 eine Spannungsregelung aktiviert.

Da - wie bereits erwähnt - das oben beschriebene mathematische Modell relativ einfach ist, kann es auch dazu kommen, dass der berechnete Solllaststrom Isoll zu groß ist und die Zwischenkreisspannung Uzk fällt.

Um zu verhindern, dass die Zwischenkreisspannung Uzk zu klein wird, überwacht die Steuereinrichtung 100 den Gleichspannungszwischenkreis 60 auch dahingehend, ob die Zwischenkreisspannung Uzk einen vorgegebenen Spannungsminimalwert Umin unterschreitet. Stellt sie ein Unterschreiten des Spannungsminimalwerts Umin fest, so steuert sie den netzseitigen Umrichter 50 derart an, dass er netzseitige Energie auch während des Bremsbetriebs in den Gleichspannungszwischenkreis 60 einspeist.

Figur 3 zeigt beispielhaft eine mögliche technische Umsetzung einer netzseitigen Stützung der Zwischenkreisspannung Uzk während des Bremsbetriebs in Form eines Blockschaltbilds. Man erkennt einen weiteren Differenzbildner 200, der die Differenz zwischen der tatsächlichen Zwischenkreisspannung Uzk und dem Spannungsminimalwert Umin unter Bildung eines Differenzwerts dUmin bildet. Der Differenzwert dUmin wird in einen weiteren PI-Regler 210 eingespeist, der einen Stromfluss I-netz in Richtung des Gleichspannungszwischenkreises 60 hervorruft.

Ein Strom Ir bzw. Energiefluss in Gegenrichtung im Falle, dass die Zwischenkreisspannung Uzk den Spannungsminimalwert Umin überschreitet, wird durch eine Rückspeisebarriere 220 unterbunden. Die Rückspeisebarriere 220 kann in der Steuereinrichtung 100 oder einer internen Steuerfunktion des netzseitigen Umrichters 50 integriert sein.

Die oben beschriebenen Komponenten 110, 120, 130, 140, 150, 160, 170, 200, 210 und 220 werden vorzugsweise durch Softwaremodule eines Steuerprogramms SPM gebildet, das in einem Speicher 101 der Steuereinrichtung 100 abgespeichert ist und bei Ausführung durch eine Recheneinrichtung 102 der Steuereinrichtung 100 die beschriebenen Verfahrensschritte durchführt (vgl. Figur 1).

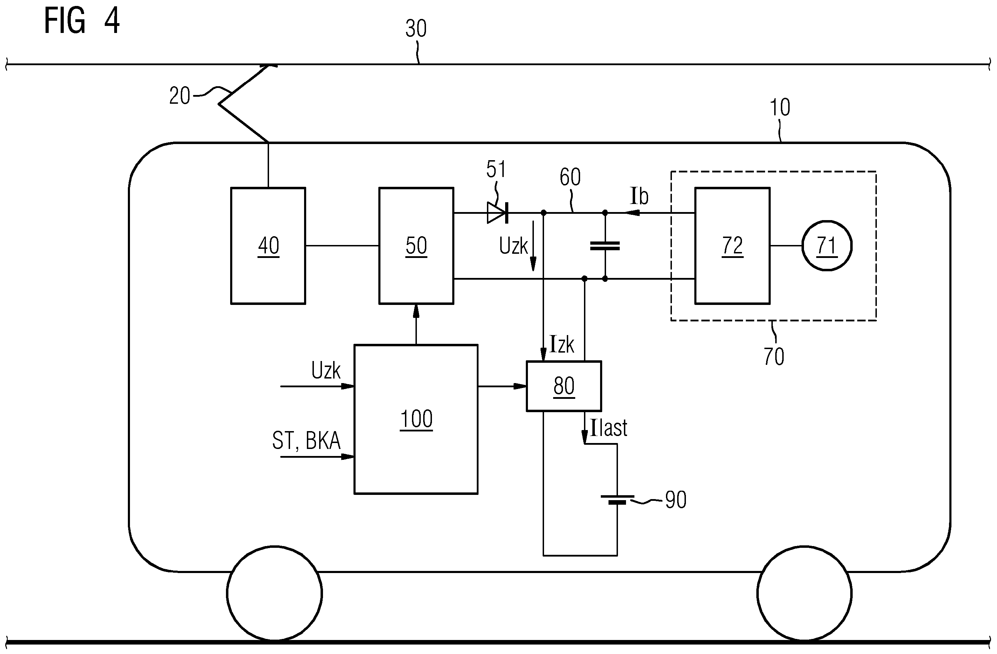

Die Figur 4 zeigt ein zweites Ausführungsbeispiel für ein erfindungsgemäßes Schienenfahrzeug 10. Bei dem Ausführungsbeispiel gemäß Figur 4 ist eine Energierückspeisung in das streckenseitige Energieversorgungsnetz 30 durch eine Diode 51 zwischen dem netzseitigen Umrichter 50 und dem Gleichspannungszwischenkreis 60 dauerhaft konstruktiv blockiert. Eine Ansteuerung des netzseitigen Umrichters 50 im Hinblick auf eine Blockade der Energierückspeisung ist also nicht erforderlich. Im Übrigen gelten die obigen Erläuterungen im Zusammenhang mit den Figuren 1 bis 3 bei dem Ausführungsbeispiel gemäß Figur 4 entsprechend.

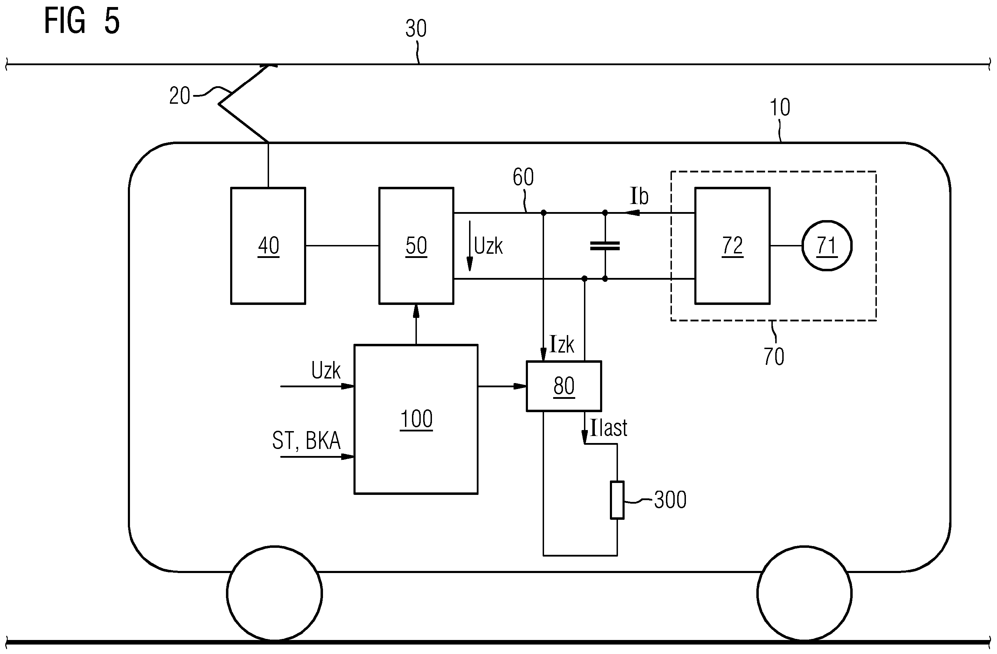

Die Figur 5 zeigt ein drittes Ausführungsbeispiel für ein erfindungsgemäßes Schienenfahrzeug 10. Bei dem Ausführungsbeispiel gemäß Figur 5 ist an den internen Umrichter 80 als Last ein ohmscher Widerstand 300 angeschlossen, der die elektrische Bremsenergie in Wärme umsetzt. Als interner Umrichter 80 kann anstelle eines DC/DC-Wandlers beispielsweise auch ein Wechselrichter eingesetzt werden, der den ohmschen Widerstand 300 mit Wechselstrom beaufschlagt. Im Übrigen gelten die obigen Erläuterungen im Zusammenhang mit den Figuren 1 bis 4 bei dem Ausführungsbeispiel gemäß Figur 5 entsprechend.

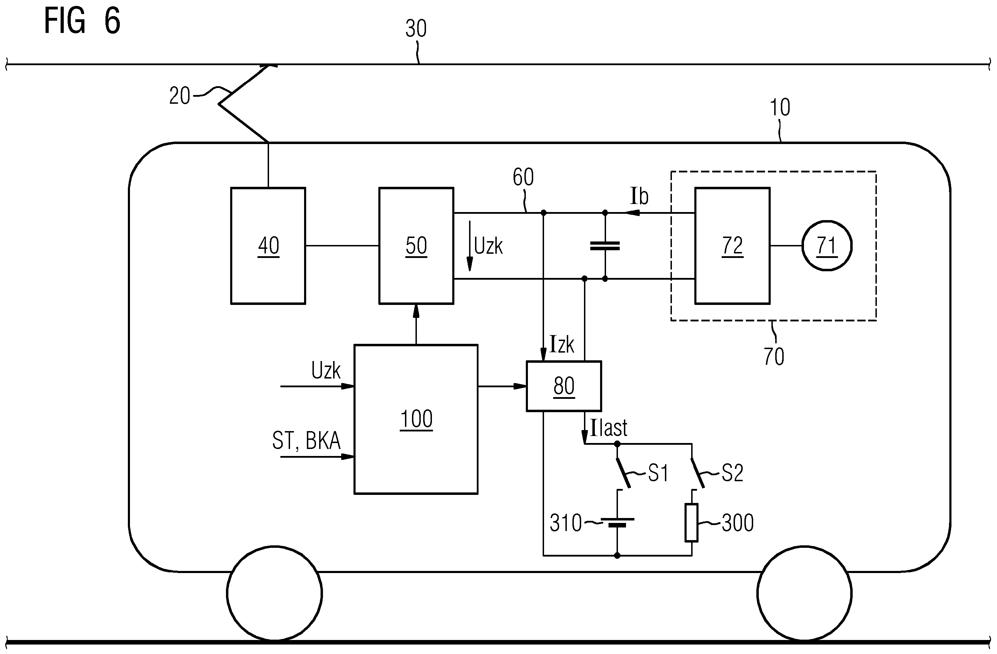

Die Figur 6 zeigt ein viertes Ausführungsbeispiel für ein erfindungsgemäßes Schienenfahrzeug 10. Bei dem Ausführungsbeispiel gemäß Figur 6 sind an den internen Umrichter 80 als Last sowohl ein ohmscher Widerstand 300 als auch eine Batterie 310 angeschlossen. Durch Öffnen und Schließen zweier Schalter S1 und S2 kann die Steuereinrichtung 100 die elektrische Bremsenergie wahlweise speichern oder in Wärme umwandeln, beispielsweise wenn die Batterie 310 voll geladen ist. Im Übrigen gelten die obigen Erläuterungen im Zusammenhang mit den Figuren 1 bis 5 bei dem Ausführungsbeispiel gemäß Figur 6 entsprechend.

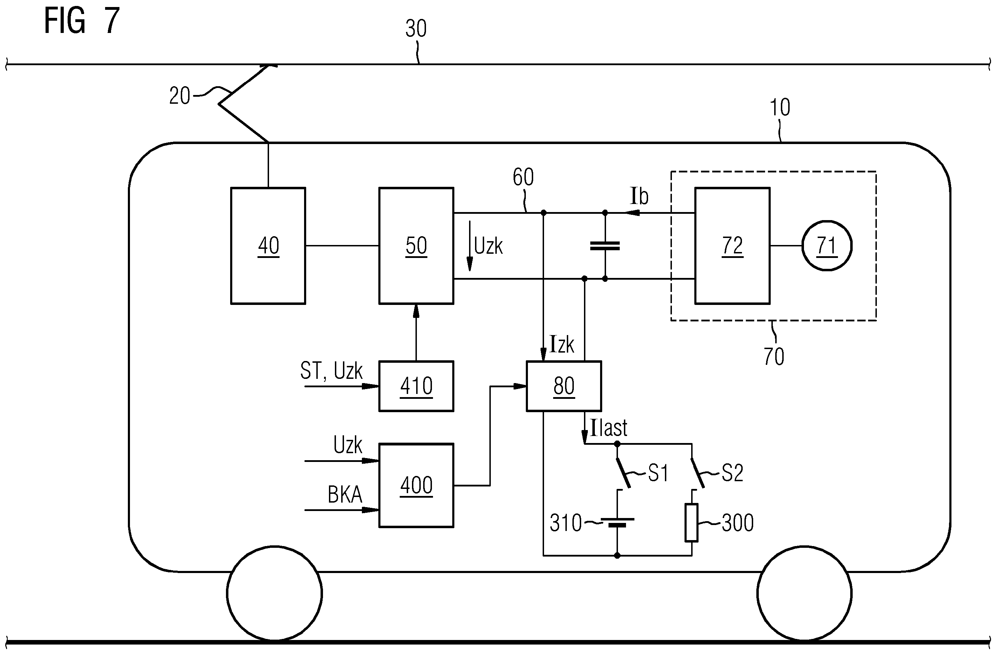

Die Figur 7 zeigt ein fünftes Ausführungsbeispiel für ein erfindungsgemäßes Schienenfahrzeug 10. Bei dem Ausführungsbeispiel gemäß Figur 7 ist zur Ansteuerung des internen Umrichters 80 ein erstes Steuermodul 400 und zur Ansteuerung des netzseitigen Umrichters 50 ein von dem ersten Steuermodul 400 unabhängiges zweites Steuermodul 410 vorhanden.

Das erste Steuermodul 400 steuert den internen Umrichter 80 vorzugsweise genauso an, wie bei den Ausführungsbeispielen gemäß den Figuren 1 bis 6 die Steuereinrichtung 100 den internen Umrichter 80 ansteuert. Das erste Steuermodul 400 kann als Softwaremodul in der Steuersoftware des internen Umrichters 80 oder in der Steuersoftware eines zentralen Fahrzeugsteuergeräts implementiert sein.

Das zweite Steuermodul 410 steuert den netzseitigen Umrichter 50 vorzugsweise genauso an, wie bei den Ausführungsbeispielen gemäß den Figuren 1 bis 6 die Steuereinrichtung 100 den netzseitigen Umrichter 50 ansteuert. Das zweite Steuermodul 410 kann als Softwaremodul in der Steuersoftware des netzseitigen Umrichters 50 oder in der Steuersoftware eines zentralen Fahrzeugsteuergeräts implementiert sein.

Alternativ können die beiden voneinander unabhängig arbeitenden Steuermodule 400 und 410 durch Softwaremodule gebildet sein, die in dem Speicher 101 der Steuereinrichtung 100 gemäß Figur 1, beispielsweise als Programmteile des Steuerprogramms SPM, abgespeichert sind und bei Ausführung durch die Recheneinrichtung 102 der Steuereinrichtung 100 die beschriebenen Verfahrensschritte durchführen. Die Steuereinrichtung 100 kann beispielsweise ein Fahrzeugsteuergerät oder einen Bestandteil eines Fahrzeugsteuergeräts bilden.

Im Übrigen gelten die obigen Erläuterungen im Zusammenhang mit den Figuren 1 bis 6 bei dem Ausführungsbeispiel gemäß Figur 7 entsprechend.

Abschließend sei erwähnt, dass die Merkmale aller oben beschriebenen Ausführungsbeispiele untereinander in beliebiger Weise kombiniert werden können, um weitere andere Ausführungsbeispiele zu bilden.

**Patentansprüche**

**1.**   Verfahren zum Betreiben eines Fahrzeugs (10), das mit einem streckenseitigen Energieversorgungsnetz (30) in Verbindung steht,

wobei während eines Bremsbetriebs innerhalb eines Streckenabschnitts mit unzulässiger Energierückspeisung ins Energieversorgungsnetz (30)

- ein Antrieb (70) des Fahrzeugs (10) als elektrodynamische Bremse betrieben wird und elektrische Bremsenergie des Antriebs (70) in einen Gleichspannungszwischenkreis (60) des Fahrzeugs eingespeist wird,

- Energie aus dem Gleichspannungszwischenkreis (60) entnommen wird, indem ein Laststrom (Ilast) in eine fahrzeugseitige Last (90, 300, 310) eingespeist wird, und

- eine Energierückspeisung vom Gleichspannungszwischenkreis (60) in das Energieversorgungsnetz (30) blockiert wird,

- die Höhe des Laststroms (Ilast) in Abhängigkeit von einer Bremskraftangabe (BKA) eingestellt wird, die eine dem Antrieb (70) vorgegebene und von diesem auszuübende Bremskraft angibt, und

- in Abhängigkeit von der Bremskraftangabe (BKA) die elektrische Bremsleistung (Pb) des Antriebs (70) berechnet wird und anhand der berechneten Bremsleistung (Pb) ein Solllaststrom (Isoll) berechnet wird,

**dadurch gekennzeichnet, dass**

- ein interner Umrichter (80), der zwischen den Gleichspannungszwischenkreis (60) und die fahrzeugseitige Last (90, 300, 310) geschaltet ist, in Abhängigkeit von dem berechneten Solllaststrom (Isoll) gesteuert wird,

- wobei der interne Umrichter (80) derart betrieben wird, dass der Laststrom (Ilast) dem berechneten Solllaststrom (Isoll) entspricht, solange die Zwischenkreisspannung (Uzk) einen vorgegebenen Spannungsmaximalwert (Umax) unterschreitet, und

- wobei der Laststrom (Ilast) größer als der berechnete Solllaststrom (Isoll) eingestellt wird, wenn die Zwischenkreisspannung (Uzk) den vorgegebenen Spannungsmaximalwert (Umax) überschreitet.

2. Verfahren nach Anspruch 1,
**dadurch gekennzeichnet, dass**
die Berechnung des Solllaststromes (Isoll) derart erfolgt, dass die durch den Solllaststrom (Isoll) hervorgerufene Leistungsentnahme aus dem Gleichspannungszwischenkreis (60) der Bremsleistung (Pb) entspricht, die vom Antrieb (70) gemäß der Bremskraftangabe (BKA) in den Gleichspannungszwischenkreis (60) eingespeist wird.

3. Verfahren nach Anspruch 1,
**dadurch gekennzeichnet, dass**

- ein Differenzspannungswert (dUmax) ermittelt wird, der die Überschreitung des Spannungsmaximalwerts (Umax) quantitativ angibt, und

- der Laststrom (Ilast) um eine Stromdifferenz (dI) größer als der Solllaststrom (Isoll) eingestellt wird, die proportional zu dem ermittelten Differenzspannungswert (dUmax) ist.

4. Verfahren nach Anspruch 3,
**dadurch gekennzeichnet, dass**
die Stromdifferenz (dI) mit einem PI-Regler (140) ermittelt wird.

5. Verfahren nach einem der voranstehenden Ansprüche,
**dadurch gekennzeichnet, dass**

- das Fahrzeug (10) einen netzseitigen Umrichter (50) aufweist, der den Gleichspannungszwischenkreis (60) mit dem streckenseitigen Energieversorgungsnetz (30) verbindet oder zumindest verbinden kann, und

- die Energierückspeisung vom Gleichspannungszwischenkreis (60) in das Energieversorgungsnetz (30) blockiert wird, indem der netzseitige Umrichter (50) in Rückspeiserichtung blockiert wird.

6. Verfahren nach Anspruch 5,
**dadurch gekennzeichnet, dass**
der netzseitige Umrichter (50) derart angesteuert wird, dass er netzseitige Energie auch während des Bremsbetriebs in den Gleichspannungszwischenkreis (60) einspeist, sofern die Zwischenkreisspannung (Uzk) einen vorgegebenen Spannungsminimalwert (Umin) unterschreitet.

7. Verfahren nach einem der voranstehenden Ansprüche,
**dadurch gekennzeichnet, dass**

die netzseitige Energie, die der netzseitige Umrichter (50) während des Bremsbetriebs in den Gleichspannungszwischenkreis (60) einspeist, proportional zu dem Spannungsbetrag ist, um den die Zwischenkreisspannung (Uzk) den Spannungsminimalwert (Umin) unterschreitet.

8. Verfahren nach einem der voranstehenden Ansprüche,
   **dadurch gekennzeichnet, dass**

   - eine Energierückspeisung in Richtung des streckenseitigen Energieversorgungsnetzes (30) beim Bremsen des Fahrzeugs (10) in einem Streckenabschnitt mit zulässiger Energierückspeisung erlaubt wird,
   - wobei die Energierückspeisung in Richtung des streckenseitigen Energieversorgungsnetzes (30) durch Ansteuerung des netzseitigen Umrichters (50) erfolgt.

9. Verfahren nach einem der voranstehenden Ansprüche,
   **dadurch gekennzeichnet, dass** der interne Umrichter (80) ein DC/DC-Wandler ist.

10. Fahrzeug (10) mit einem Stromabnehmer (20), der mit einem streckenseitigen Energieversorgungsnetz (30) verbindbar ist, wobei bei Fahrt des Fahrzeugs (10) in einem Streckenabschnitt, in dem eine Energierückspeisung in das streckenseitige Energieversorgungsnetz (30) unzulässig ist,

    - während des Bremsbetriebs ein Antrieb (70) des Fahrzeugs (10) als elektrodynamische Bremse betreibbar ist und elektrische Bremsenergie in einen Gleichspannungszwischenkreis (60) einspeisen kann,
    - Energie aus dem Gleichspannungszwischenkreis (60) entnehmbar ist, indem ein Laststrom (Ilast) in eine fahrzeugseitige Last (90, 300, 310) eingespeist wird, und
    - eine Energierückspeisung vom Gleichspannungszwischenkreis (60) in das Energieversorgungsnetz (30) blockiert wird, **dadurch gekennzeichnet, dass**
    - das Fahrzeug (10) einen internen Umrichter (80) aufweist, der zwischen den Gleichspannungszwischenkreis (60) und die fahrzeugseitige Last (90, 300, 310) geschaltet ist und dazu ausgebildet ist, den Laststrom (Ilast) in die fahrzeugseitige Last (90, 300, 310) einzuspeisen, und
    - das Fahrzeug (10) eine Steuereinrichtung (100) oder ein Steuermodul (400) aufweist, die bzw. das mit dem internen Umrichter (80) verbunden ist und bei Vorliegen eines Sperrsignals (ST), das ein Befahren eines Streckenabschnitts ohne Energierückspeisungsmöglichkeit anzeigt, den internen Umrichter (80) dazu ansteuert, einen Solllaststrom, der unter Heranziehung einer Bremskraftangabe ermittelt worden ist, zu entnehmen und den Laststrom (Ilast) höher als den Solllaststrom einzustellen, wenn die Zwischenkreisspannung (Uzk) einen vorgegebenen Spannungsmaximalwert (Umax) überschreitet.

11. Fahrzeug (10) nach Anspruch 10,
    **dadurch gekennzeichnet, dass**

    - ein netzseitiger Umrichter (50) vorhanden ist, der zwischen den Gleichspannungszwischenkreis (60) und das Energieversorgungsnetz (30) geschaltet ist, und
    - das Fahrzeug (10) eine Steuereinrichtung (100) oder ein Steuermodul (410) aufweist, die bzw. das mit dem netzseitigen Umrichter (50) verbunden ist und bei Vorliegen eines Sperrsignals (ST), das ein Befahren eines Streckenabschnitts ohne Energierückspeisungsmöglichkeit anzeigt, den netzseitigen Umrichter (50) dazu ansteuert, Energiefluss in Energierückflussrichtung zu sperren und bei Bremsbetrieb des Fahrzeugs Energie in den Gleichspannungszwischenkreis (60) einzuspeisen, sofern die Zwischenkreisspannung (Uzk) einen vorgegebenen Spannungsminimalwert unterschreitet.

## Claims

1. Method for operating a vehicle (10) connected to a track-side energy supply network (30),

   wherein, during a braking mode within a track section with unauthorised energy feedback into the energy supply network (30),

   - a drive (70) of the vehicle (10) is operated as an electrodynamic brake and electrical braking energy of the drive (70) is fed into a DC intermediate circuit (60) of the vehicle,
   - energy is taken from the DC intermediate circuit (60) by feeding a load current (Iload) into a vehicle-side load (90, 300, 310), and
- an energy feedback from the DC intermediate circuit (60) into the energy supply network (30) is blocked,
- the level of load current (Iload) is adjusted depending on a specified braking force (BKA), which specifies a braking force predetermined for the drive (70) and to be exerted by the drive, and
- the electrical braking power (Pb) of the drive (70) is calculated depending on the specified braking force (BKA) and a target load current (Itarget) is calculated based on the calculated braking power (Pb),

**characterised in that**

- an internal converter (80) connected between the DC intermediate circuit (60) and the vehicle-side load (90, 300, 310) is controlled depending on the calculated target load current (Itarget),
- wherein the internal converter (80) is operated such that the load current (Iload) corresponds to the calculated target load current (Itarget), provided the intermediate circuit voltage (Uzk) falls below a predefined maximum voltage value (Umax), and
- wherein the load current (Iload) is adjusted to be greater than the calculated target load current (Itarget) if the intermediate circuit voltage (Uzk) exceeds the predefined maximum voltage value (Umax).

2. Method according to claim 1,
**characterised in that**
the calculation of the target load current (Itarget) is performed such that the power drain, caused by the target load current (Itarget), from the DC intermediate circuit (60) corresponds to the braking power (Pb) that is fed by the drive (70) into the DC intermediate circuit (60) according to the specified braking force (BKA).

3. Method according to claim 1,
**characterised in that**

- a difference voltage value (dUmax) is ascertained which quantitively specifies the exceedance of the maximum voltage value (Umax), and
- the load current (Iload) is adjusted to be greater than the target load current (Itarget) by a current difference (dI) which is proportional to the ascertained difference voltage value (dUmax).

4. Method according to claim 3,
**characterised in that**
the current difference (dI) is ascertained using a PI controller (140).

5. Method according to one of the preceding claims,
**characterised in that**

- the vehicle (10) has a network-side converter (50), which connects or at least can connect the DC intermediate circuit (60) to the track-side energy supply network (30), and
- the energy feedback from the DC intermediate circuit (60) into the energy supply network (30) is blocked **in that** the network-side converter (50) is blocked in the feedback direction.

6. Method according to claim 5,
**characterised in that**
the network-side converter (50) is actuated such that network-side energy is also fed into the DC intermediate circuit (60) during the braking mode, provided that the intermediate circuit voltage (Uzk) falls below a predefined minimum voltage value (Umin).

7. Method according to one of the preceding claims,
**characterised in that**
the network-side energy fed into the DC intermediate circuit (60) by the network-side converter (50) during the braking mode is proportional to the voltage value by which the intermediate circuit voltage (Uzk) falls below the minimum voltage value (Umin).

8. Method according to one of the preceding claims,
**characterised in that**

- an energy feedback in the direction of the track-side energy supply network (30) during vehicle (10) braking is permitted in a track section with authorised energy feedback,
- wherein the energy feedback in the direction of the track-side energy supply network (30) takes place by way of actuation of the network-side converter (50).

9. Method according to one of the preceding claims,
**characterised in that**
the internal converter (80) is a DC/DC converter.

10. Vehicle (10) with a current collector (20) which can be connected to a track-side energy supply network (30), wherein while the vehicle (10) is travelling in a track section, in which an energy feedback into the track-side energy supply network (30) is unauthorised,

- during the braking mode, a drive (70) of the vehicle (10) can be operated as an electrodynamic brake and electrical braking energy can be fed into a DC intermediate circuit (60),
- energy can be taken from the DC intermediate circuit (60) by feeding a load current (Iload) into a vehicle-side load (90, 300, 310), and
- an energy feedback into the energy supply network (30) is blocked by the DC intermediate circuit (60),
**characterised in that**
- the vehicle (10) has an internal converter (80) which is connected between the DC intermediate circuit (60) and the vehicle-side load (90, 300, 310) and is designed to feed the load current (Iload) into the vehicle-side load (90, 300, 310), and
- the vehicle (10) has a control facility (100) or a control module (400) which is connected to the internal converter (80) and, in the presence of a blocking signal (ST) which displays an instance of traveling a track section without the possibility of energy feedback, actuates the internal converter (80) such that it takes a target load current that has been ascertained using a specified braking force and adjusts the load current (Iload) to be greater than the target load current if the intermediate circuit voltage (Uzk) exceeds a predefined maximum voltage value (Umax).

11. Vehicle (10) according to claim 10,
**characterised in that**

- a network-side converter (50) is present which is connected between the DC intermediate circuit (60) and the energy supply network (30), and
- the vehicle (10) has a control facility (100) or a control module (410) which is connected to the network-side converter (50) and, in the presence of a blocking signal (ST) which displays an instance of traveling a track section without the possibility of energy feedback, actuates the network-side converter (50) such that it blocks energy flow in the direction of energy feedback and during braking mode of the vehicle, feeds energy into the DC intermediate circuit (60) provided that the intermediate circuit voltage falls below a predefined minimum voltage value (Umin).

**Revendications**

1. Procédé pour faire fonctionner un véhicule (10), qui est en liaison avec un réseau (30) d'alimentation en énergie sur la voie, dans lequel, pendant un fonctionnement en freinage dans un tronçon de voie ayant une alimentation en énergie en retour inadmissible dans le réseau (30) d'alimentation en énergie,

- on fait fonctionner un entraînement (70) du véhicule (10) en frein électrodynamique et on alimente en énergie électrique de freinage de l'entraînement (70) un circuit (60) intermédiaire à tension continue du véhicule,
- on prélève de l'énergie du circuit (60) intermédiaire à tension continue en alimentant, en un courant (Ilast) de charge, une charge (90, 300, 310) embarquée sur le véhicule, et
- on bloque une alimentation d'énergie en retour du circuit (60) intermédiaire à tension continue au réseau (30) d'alimentation en énergie,
- on règle le niveau du courant (Ilast) de charge en fonction d'une indication (BKA) de force de freinage, qui indique une force de freinage donnée à l'avance à l'entraînement (70) et à appliquer par celui-ci, et
- en fonction de l'indication (BKA) de force de freinage, on calcule la puissance (Pb) électrique de freinage de l'entraînement (70),

et à l'aide de la puissance (Pb) de freinage calculée, on calcule un courant (Isoll) de charge de consigne,

**caractérisé en ce que** l'

- on commande, en fonction du courant (Isoll) de charge de consigne calculé, un convertisseur (80) interne, qui est monté entre le circuit (60) intermédiaire à tension continue et la charge (90, 300, 310) embarquée sur le véhicule,
- dans lequel on fait fonctionner le convertisseur (80) interne, de manière à ce que le courant (Ilast) de charge corresponde au courant (Isoll) de charge de consigne calculé tant que la tension (Uzk) du circuit intermédiaire est inférieure à une valeur (Umax) maximum de tension donnée à l'avance, et
- dans lequel on règle le courant (Ilast) de charge à une valeur plus grande que le courant (Isoll) de charge de consigne calculé, si la tension (Uzk) du circuit intermédiaire dépasse la valeur (Umax) maximum de tension donnée à l'avance.

2. Procédé suivant la revendication 1,
**caractérisé en ce que**
le calcul du courant (Isoll) de charge de consigne s'effectue, de manière à ce que le prélèvement de puissance provoqué par le courant (Isoll) de charge de consigne du circuit (60) intermédiaire à tension continue corresponde à la puissance (Pb) de freinage, qui alimente un circuit (60) intermédiaire à tension continue par l'entraînement (70) suivant l'indication (BKA) de force de freinage.

3. Procédé suivant la revendication 1,
**caractérisé en ce que** l'

- on détermine une valeur (dUmax) de tension de différence, qui indique quantitativement le dépassement de la valeur (Umax) maximum de tension, et
- on règle le courant (Ilast) de charge, d'une différence (dI) de courant plus grande que le courant (Isoll) de charge de consigne, qui est proportionnelle à la valeur (dUmax) de tension de différence déterminée.

4. Procédé suivant la revendication 3,
**caractérisé en ce que** l'
on détermine la différence (dI) de courant par un régleur PI (140).

5. Procédé suivant l'une des revendications précédentes,
**caractérisé en ce que**

- le véhicule (10) a un convertisseur (50) du côté du réseau, qui relie ou du moins peut relier le circuit (60) intermédiaire à tension continue au réseau (30) d'alimentation en énergie sur la voie, et
- on bloque l'alimentation en énergie de retour du circuit (60) intermédiaire à tension continue au réseau (30) d'alimentation en énergie, en bloquant le convertisseur (50) du côté du réseau dans le sens de l'alimentation de retour.

6. Procédé suivant la revendication 5,
**caractérisé en ce que** l'
on commande le convertisseur (50) du côté du réseau, de manière à ce qu'il alimente en énergie du côté du réseau le circuit (60) intermédiaire à tension continue, également pendant le fonctionnement au freinage, dès que la tension (Uzk) du circuit intermédiaire devient inférieure à une valeur (Umin) minimum de tension donnée à l'avance.

7. Procédé suivant l'une des revendications précédentes,
**caractérisé en ce que**
l'énergie du côté du réseau, en laquelle le convertisseur (50) du côté du réseau alimente le circuit (60) intermédiaire à tension continue pendant le fonctionnement en freinage, est proportionnelle à la valeur absolue de la tension, dont la tension (Uzk) de circuit intermédiaire est inférieure à la valeur (Umin) minimum de tension.

8. Procédé suivant l'une des revendications précédentes,
**caractérisé en ce que** l'

- on autorise une alimentation en énergie de retour en direction du réseau (30) d'alimentation en énergie sur la voie, lors du freinage du véhicule (10) dans un tronçon de voie ayant une alimentation en énergie de retour admissible,

- dans lequel l'alimentation en énergie de retour en direction du réseau (30) d'alimentation en énergie sur la voie s'effectue par commande du convertisseur (50) du côté du réseau.

9. Procédé suivant l'une des revendications précédentes, **caractérisé en ce que** le convertisseur (80) interne est un hacheur courant continu/courant continu.

10. Véhicule (10) comprenant un appareil (20) de prise de courant, qui peut être connecté à un réseau (30) d'alimentation en énergie sur la voie, dans lequel, lorsque le véhicule (10) circule dans un tronçon de voie, dans lequel une alimentation en énergie de retour dans le réseau (30) d'alimentation en énergie sur la voie est inadmissible,

- pendant le fonctionnement en freinage, un entraînement (70) du véhicule (10) peut fonctionner en frein électrodynamique et de l'énergie électrique de freinage peut alimenter un circuit (60) intermédiaire à tension continue,
- de l'énergie du circuit (60) intermédiaire à tension continue peut être prélevée en alimentant en un courant (Ilast) de charge une charge (90, 300, 310) embarquée sur le véhicule, et
- une alimentation en énergie en retour du circuit (60) intermédiaire à tension continue au réseau (30) d'alimentation en énergie est bloquée,
**caractérisé en ce que**
- le véhicule (10) comporte un convertisseur (80) interne, qui est monté entre le circuit (60) intermédiaire à tension continue et la charge (90, 300, 310) embarquée sur le véhicule et qui est constitué pour alimenter en le courant (Ilast) de charge la charge (90, 300, 310) embarquée sur le véhicule, et
- le véhicule (10) a un dispositif (100) de commande ou un module (400) de commande, qui est raccordé au convertisseur (80) interne et qui, en présence d'un signal (ST) de blocage, qui indique que l'on emprunte un tronçon de voie sans possibilité d'alimentation en énergie de retour, commande le convertisseur (80) interne pour prélever un courant de charge de consigne, qui a été déterminé en tirant parti d'une indication de force de freinage, et pour régler le courant (Ilast) de charge à une valeur plus grande que le courant de charge de consigne, si la tension (Uzk) du circuit intermédiaire dépasse une valeur (Umax) maximum de tension donnée à l'avance.

11. Véhicule (10) suivant la revendication 10, **caractérisé en ce qu'**

- il y a un convertisseur (50) du côté du réseau, qui est monté entre le circuit (60) intermédiaire à tension continue et le réseau (30) d'alimentation en énergie, et
- le véhicule (10) a un dispositif (100) de commande ou un module (410) de commande, qui est raccordé au convertisseur (50) du côté du réseau et qui, en présence d'un signal (ST) de blocage, qui indique que l'on circule sur un tronçon de voie sans possibilité d'alimentation en énergie de retour, commande le convertisseur (50) du côté du réseau pour bloquer un flux d'énergie dans la direction de reflux d'énergie et, lors du fonctionnement en freinage du véhicule, alimente en énergie le circuit (60) intermédiaire à tension continue, dès que la tension (Uzk) du circuit intermédiaire devient inférieure à une valeur minimum de tension donnée à l'avance.

FIG 1

FIG 2

BKA, Fsoll, V(t) → 110

110 → Pb(t) → 120

120 → Isoll = Pb(t)/Ulast

Uzk → Uzk<Umax? 130

FS

Umax → 150 (+), Uzk (−) → dUmax → 140 → −dI → 160 (×), −1 → +dI → 170 (+) → Ilast = Isoll + dI

FIG 3

Umin → 200 (+), Uzk (−) → dUmin → 210 → Inetz → 220, Ir = 0

FIG 4

FIG 5

FIG 6

EP 4 197 847 B1

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5331261 A
- JP 2008263741 A
- JP 2017099172 A
- EP 1985490 A1

**In der Beschreibung aufgeführte Nicht-Patentliteratur**

- Onboard storage in Japanese electrified lines. **OGASA MASAMICHI**. POWER ELECTRONICS AND MOTION CONTROL CONFERENCE (EPE/PEMC), 2010 14TH INTERNATIONAL. IEEE, 06 September 2010, S7-9, S7-15